# EUROPÄISCHE PATENTSCHRIFT

(11) **EP 2 932 841 B1**
(45) Veröffentlichungstag und Bekanntmachung des Hinweises auf die Patenterteilung: **25.01.2017**
(21) Anmeldenummer: 15401028.4
(22) Anmeldetag: 14.04.2015
(51) Int. Cl.: A01M 7/00

(54) **AUSBRINGFAHRZEUG**
APPLICATION VEHICLE
ÉPANDEUR

(30) Priorität: 16.04.2014 DE 102014105416
(43) Veröffentlichungstag der Anmeldung: 21.10.2015
(73) Patentinhaber: Amazonen-Werke H. Dreyer GmbH & Co. KG, 49205 Hasbergen (DE)
(72) Erfinder: Austermann, Stefan, 48291 Telgte (DE); Oberheide, Friedrich, 49143 Bissendorf (DE); Kühn, Christoph, 49824 Ringe (DE); Große Prues, Frank, 49434 Neuenkirchen-Vörden (DE)

(56) Entgegenhaltungen:
- EP-A1- 2 591 657
- DE-A1-102007 025 751
- FR-A1- 2 996 412
- US-A1- 2007 289 298

## Beschreibung

Die Erfindung betrifft ein Ausbringfahrzeug der im Oberbegriff des Patentanspruchs 1 angegebenen Art.

Solche Ausbringfahrzeuge sind beispielsweise Feldspritzen oder Traktoren mit angebautem Gestänge zum Spritzen, wobei das Gestänge eine Arbeitsbreite von mehr als 20 Metern haben kann. Das Gestänge hat mittensymmetrische Ausleger, und trägt beispielsweise nach unten gerichtete Düsen zum Ausbringen eines Spritzmittels, wobei eine sich ändernde Distanz der Düsen zum Boden zu einer ungleichmäßigen Ausbringung führt. Bei solchen Ausbringfahrzeugen besteht deshalb die Notwendigkeit, das Gestänge in möglichst gleichbleibendem Abstand zum Boden zu führen. Wankbewegungen des Ausbringfahrzeugs um eine in Fahrzeugrichtung orientierte Längsachse sollen nicht, oder möglichst wenig, auf das Gestänge übertragen werden. Die weitestgehend bodenparallele Einstellung des Gestänges soll auch bei asymmetrischer Auskragung des Gestänges, beispielsweise bei einseitig eingeklappten Gestängeabschnitten erhalten bleiben.

Bei dem aus DE 10 200 702 5751 A1 bekannten Ausbringfahrzeug liegt der Schwerpunkt des Gestänges in etwa in der Achse, um welche das Gestänge relativ zum Ausbringfahrzeug, beispielsweise an dessen Rahmen, schwenkbar ist An den Enden des Gestänges ermitteln Sensoren den Abstand zum Boden. Die Sensoren sind mit der Steuerelektronik verbunden, die die Hydraulik-Aktuatoren-Anordnung so ansteuert, dass eine zumindest annähernde bodenparallele Schwenklage des Gestänges erreichbar ist. Bei durch einseitige Bodenunebenheiten verursachten Wankbewegungen des Ausbringfahrzeuges, um eine in Fahrtrichtung liegende virtuelle Achse,.wird das Gestänge im Schwerpunkt unzweckmäßig und gegebenenfalls rasch seitlich versetzt. Die Hydraulik-Aktuatoren-Anordnung wird so angesteuert, dass aus Wankbewegungen des Ausbringfahrzeugs über die Druckquelle über das Hydraulikventil an der druckbeaufschlagten Beaufschlagungsseite nahezu inkompressible Hydraulikmediumsäule resultierende Momente, die das Gestänge aus der bodenparallelen Lage zu bringen suchen, kompensiert werden. Dies erfordert hohen steuerungstechnischen Aufwand und einen schnellen Regeleingriff.

Bei der Ausbringmaschine gem. EP 2 591 657 A1 wird eine noch hochwertigere Steuerungselektronik eingesetzt, um unter anderem Wankbewegungen des Ausbringfahrzeugs über Sensoren abzugreifen und die Hydraulik-Aktuatoren-Anordnung sogar im Wesentlichen in Echtzeit entsprechend nachzuführen. Diese aufwendige Steuerelektronik und die Sensorik sind teuer und aufgrund der Komplexität fehleranfällig. Außerdem erfolgen praktisch permanent Nachführbewegungen, damit die Hydraulik-Aktuatoren-Anordnung keine parasitären Kräfte oder Momente in das Gestänge übertragen kann.

Bei einem aus FR 277 903 1A bekannten Ausbringfahrzeug ist das Gestänge über mehrere Gelenkstellen und u.a. über eine Kette relativ zum Ausbringfahrzeug beweglich, wobei die Hydraulik-Aktuatoren-Anordnung zwischen einer am Fahrzeug abgestützen Kniegelenksabhängung des Gestänges und dem Gestänge eingeordnet ist.

Weiterer technologischer Hintergrund: US 2007/289 298 A1, FR2 996 412 A1.

Der Erfindung liegt die Aufgabe zugrunde, ein Ausbringfahrzeug der eingangs genannten Art dahingehend zu verbessern, dass eine bodenparallele Schwenklage des Gestänges leichter einstellbar und haltbar ist, und mit geringem steuerungstechnischen Aufwand Wankbewegungen des Ausbringfahrzeugs vom Gestänge ferngehalten oder effizient gedämpft werden.

Die gestellte Aufgabe wird mit den Merkmalen des Patentanspruchs 1 gelöst.

Da das zumindest eine einstellbare Hydraulikelement einen permanenten konstanten Volumenstrom einstellt, und aus diesem Volumenstrom mit den im Durchgangs-Querschnitt verstellbaren Elementen die individuellen Drücke an den Beaufschlagungsseiten eingestellt werden, wobei eine permanente Zirkulation stattfindet, liegt keine eingespannte inkompressible Hydraulikmediumsäule vor, die die bodenparallele Schwenklage aufheben oder Wankbewegungen des Ausbringfahrzeugs im Wesentlichen ungedämpft auf das Gestänge übertragen könnte, sondern liegt eine Art nachgebende Schwimmstellung mit permanenter Zu- und Abströmung zu und von den Beaufschlagungsseiten vor.

In einer Ausführungsform stellt das zumindest eine Stromregelventil den permanenten und konstanten Volumenstrom ein, und werden aus diesem Volumenstrom über die Stelldrosseln die individuellen Drücke an den Beaufschlagungsseiten eingestellt. Die Stelldrosseln ermöglichen es mit steuerungstechnisch geringem Aufwand, falls nötig, dennoch an den Beaufschlagungsseiten individuelle Drücke zu erzeugen. Die Verstelldrosseln erlauben nicht nur die individuelle Druckeinstellung, sondern erzeugen auch eine sehr wirksame Abdämpfung von Kräften oder Momenten, indem sie über die jeweils an ihnen wirksame Druckdifferenz Energie aus dem Hydraulikmedium aufzehren. Die Verstellung der Stelldrosseln über die Steuerelektronik erfolgt beispielsweise in Abhängigkeit von der Gleichheit oder Ungleichheit zwischen den Sensorsignalen, und wirkt sich im System mit einer wählbaren, aber relativ geringen Verzögerung aus. Die jeweilige Dämpfung beziehungsweise das Ansprechverhalten lassen sich bequem durch Abstimmen des eingestellten Volumenstroms und der Stelldrosseln an die gegebenen Anforderungen anpassen.

Eine einfache Einstellung des Volumenstroms lässt sich auch mittels zumindest einer einen veränderbaren Hydraulikstrom liefernden Hydraulikpumpe erreichen.

Zweckmäßig ist der Wert des mit dem wenigstens einen Stromregelventil oder der Hydraulikpumpe eingestellten Volumenstroms wählbar, beispielsweise über die Steuerelektronik, oder an einer Einstellvorrichtung oder direkt am Stromregelventil. Das Stromregelventil erzeugt den gewünschten konstanten Volumenstrom unabhängig von Druckschwankungen stromauf- und stromab und auch bei fluktuierender Viskosität des Hydraulik-Mediums.

Zweckmäßig ist die Hydraulik-Aktuator-Anordnung entweder ein doppelt wirkender Hydraulik-Aktuator mit den ersten und zweiten Beaufschlagungsseiten, beispielsweise ein doppelt wirkender Hydraulikzylinder oder ein umsteuerbarer Hydraulikmotor, oder es sind zwei einfach wirkende, gegensinnig angreifende Hydraulik-Aktuatoren mit je einer Beaufschlagungsseite vorgesehen.

Bei einer bevorzugten Lösung sind die Beaufschlagungsseiten miteinander quer verbunden, sodass das Hydraulikmedium, das an einer Beaufschlagungsseite verdrängt wird, an der anderen Beaufschlagungsseite eingespeist werden kann. Dies erfolgt zweckmäßig über eine Verbindungsleitung, in der vorzugsweise eine Drossel enthalten ist, um den Austausch zwischen den Beaufschlagungsseiten zu beeinflussen. Die Drossel kann eine Festdrossel sein, oder eine Stelldrossel, beispielsweise eine manuell oder elektromagnetisch verstellbare Stelldrossel. Diese Drossel beeinflusst auch das Dämpfungsverhalten wünschenswert und trägt dazu bei, den Verbrauch an Hydraulikmedium zu minimieren und zu vermeiden, dass die Hydraulik-Aktuatoren-Anordnung bei abrupten Bewegungen Vakuum ziehen könnte.

Zweckmäßig ist ferner der Schwerpunkt des Gestänges im Abstand unterhalb der Achse angeordnet, sodass aus Wankbewegungen des Ausbringfahrzeuges resultierende Querbewegungen nicht unmittelbar in das Gestänge übertragen werden, da bei der gegebenen Trägheit des Gestänges nach Art eines Pendels ein zusätzlicher Freiheitsgrad um die Achse vorliegt. Dies schließt nicht aus, die Achse in etwa im Schwerpunkt des Gestänges zu platzieren.

In einer zweckmäßigen Ausführungsform sind in einem sich zu den Beaufschlagungsseiten aufzweigenden, diesen gemeinsamen Zuströmweg stromauf der Aufzweigung ein Stromregelventil und in getrennten Abströmwegen von den Beaufschlagungsseiten je eine Verstelldrossel angeordnet. Diese Ausführungsform ist baulich und steuerungstechnisch einfach. Aufgrund der direkten Verbindung der Beaufschlagungsseiten lassen sich zwar keine extremen Druckunterschiede zwischen den Beaufschlagungsseiten realisieren, für die meisten Anwendungsfälle jedoch unterschiedliche Drücke, die ausreichend sind.

Bei einer anderen Ausführungsform sind in einem sich zu dem Beaufschlagungsseiten aufzweigenden, diesen gemeinsamen Zuströmweg stromab der Aufzweigung in beiden Zuströmweg-Zweigen je ein Stromregelventil und in getrennten Abströmwegen von den Beaufschlagungsseiten je eine Stelldrossel angeordnet. Diese Ausführungsform ermöglicht es, den Druck an jeder Beaufschlagungsseite individuell und unabhängig vom Druck an der anderen Beaufschlagungsseite einzustellen.

Bei einer weiteren Ausführungsform wird anstelle der beiden Stromregelventile an der Aufzweigung des Zuströmwegs ein Stromteilerventil eingesetzt, das in jedem Zuströmweg-Zweig einen konstanten Volumenstrom einstellt. Die Volumenströme können gleich sein. Es sind auch Stromteilerventile einsetzbar, deren Teilungsverhältnis sich variieren lässt.

Bei den vorher erwähnten Ausführungsformen erfolgt die Druckeinstellung und die Dämpfung jeweils bei konstantem Zustrom und variablem Abstrom. Bei einer weiteren Ausführungsform wird hingegen mit variablem Zustrom und weitgehend konstantem Abstrom gearbeitet, in dem in einem sich zu den Beaufschlagungsseiten aufzweigenden, diesen gemeinsamen Zuströmweg stromauf der Aufzweigung ein Stromregelventil und in beiden Zuströmweg-Zweigen je eine Stelldrossel sowie in getrennten Abströmwegen von den Beaufschlagungsseiten je eine Festdrossel angeordnet sind. Diese Ausführungsvariante wird zweckmäßig kombiniert mit einer Verbindung zwischen den Beaufschlagungsseiten, in der eine Festdrossel oder konstante Blende angeordnet ist, sodass Hydraulikmedium zwischen den Beaufschlagungsseiten ausgetauscht werden kann. Für die Druckeinstellung und die Dämpfung wirken die Stelldrosseln und die Festdrosseln wechselseitig zusammen.

Zweckmäßig ist zumindest die Stelldrossel in einem magnetbetätigten Ventil angeordnet, dessen Magnet von der Steuerelektronik ansteuerbar ist. Vorzugsweise wird hier sogar ein Proportionalmagnet eingesetzt, dessen Magnetkraft dem zugeführten Strom bzw. der Spannung proportional ist, sodass der Drosselquerschnitt der Stelldrossel stufenlos verändert wird. Dieses magnetbetätigte Ventil wird beispielsweise mit hydraulischer Vorsteuerung betrieben, um mit einem klein bauenden und relativ schwachen Magneten auszukommen. Ferner kann in der Aktorik des Ventils beispielsweise eine Wegaufnehmervorrichtung vorgesehen sein, um der Steuerelektronik eine Rückmeldung für eine ordnungsgemäße Verstellung zu liefern. Alternativ kann ein anderer Antrieb zur Verstellung der Stelldrossel verwendet werden.

Ferner ist zweckmäßig das Stromregelventil beispielsweise ein Zweiwege-Stromregler und/oder kombiniert aus einer Druckwaage und einem Drosselventil in Sitzventil- oder Schieberventil-Bauweise. Vorzugsweise kann eine manuelle oder hydraulische oder magnetische Einstellvorrichtung für den Volumenstrom vorgesehen sein.

Schließlich kann es zweckmäßig sein, wenn die Steuerelektronik mindestens einstellbar oder programmiert ist für Betriebsmodi, für horizontales Gelände, für Hanglagen und für eine asymmetrische Gestängeauskragung. Im Betriebsmodus für horizontales Gelände können die beiden Stelldrosseln gleich eingestellt sein, um an beiden Beaufschlagungsseiten gleiche Drücke einzustellen und bei Wankbewegungen des Ausbringfahrzeugs aufgrund unebenen Bodens effizient zu dämpfen. Im Betriebsmodus für eine Hanglage können beispielsweise abhängig vom Hangwinkel die beiden Stelldrosseln entsprechend unterschiedlich eingestellt sein, z.B. unter Berücksichtigung des unterhalb der Achse liegenden Schwerpunkts, wodurch das Gestänge nach Art eines Pendels um die Achse ausgelenkt werden könnte, was durch die unterschiedlichen Drücke vermieden wird. Ähnlich wird im Betriebsmodus für asymmetrische Gestängeauskragung abhängig von der Größe der Asymmetrie von vornherein ein Unterschied zwischen den Einstellungen der Stelldrosseln gewählt.

Ausführungsformen des Erfindungsgegenstandes werden anhand der Zeichnung erläutert. Es zeigen:
- Fig. 1:: eine Schemaansicht eines Ausbringfahrzeugs in Fahrtrichtung,
- Fig. 2:: eine Ansicht ähnlich der von Fig. 1 einer weiteren Ausführungsform,
- Fig. 3:: eine Ansicht ähnlich der von Fig. 1 einer weiteren Ausführungsform,
- Fig. 4:: ein Blockschaltbild eines Hydrauliksystems,
- Fig. 5:: eine Schemadarstellung einer weiteren Ausführungsform eines Ausbringfahrzeugs ähnlich der Fig. 2 mit einem Blockschaltbild eines Hydrauliksystems,
- Fig. 6:: ein Blockschaltbild einer weiteren Ausführungsform eines Hydrauliksystems,
- Fig. 7:: ein Blockschaltbild einer noch weiteren Ausführungsform eines Hydrauliksystems, ähnlich dem von Fig. 5, jedoch mit einem doppelt wirkenden Hydraulik-Aktuator,
- Fig. 8:: ein Blockschaltbild einer noch weiteren Ausführungsform eines Hydrauliksystems.

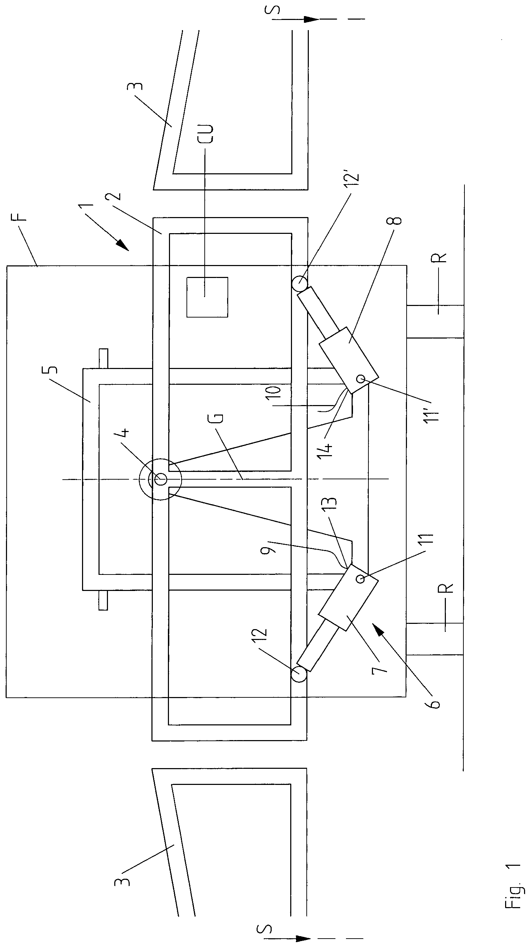

Fig. 1 ist eine schematische Hinter- oder Vorderansicht eines Ausbringfahrzeugs F, z.B. einer Feldspritze mit einem quer zur Fahrtrichtung (in der Zeichnungsebene) orientierten, im Regelfall symmetrisch beidseitig weit von einem Rahmen 5 auskragenden Gestänge 1, von welchem ein Mittelteil 2 und daran beispielsweise klappbar angeordnete Auslegerteile 3 angedeutet sind. Das Ausbringfahrzeug F kann selbstfahrend ausgelegt sein (z. B. auf Rädern R), oder wird geschleppt oder gezogen. Alternativ könnte das Gestänge 1 an einen Traktor angebaut sein.

Das Ausbringfahrzeug F hat den gegebenenfalls in seiner Höhenlage einstellbaren Rahmen 5, an welchem das Gestänge 1, z. B. mit dem Rahmen 5, um eine im Wesentlichen in Fahrtrichtung orientierte Achse 4 schwenkbar ist. Dabei kann, optional, der Schwerpunkt G des Gestänges 1 im Abstand unterhalb der Achse 4 liegen.

Beim Ausbringen soll das Gestänge 1 eine Schwenklage um die Achse 4 einnehmen, in der es zumindest im Wesentlichen bodenparallel orientiert ist. Das gilt auch für das Ausbringen in einer seitlich geneigten Hanglage oder bei asymmetrischer Auskragung des Gestänges, beispielsweise weil an einer Seite ein oder mehrere Auslegerabschnitte 3 eingeklappt ist bzw. sind.

Zum Einstellen der Schwenklage und zum Halten der Schwenklage des Gestänges 1 ist eine Hydraulik-Aktuator-Anordnung 6 zwischen dem Ausbringfahrzeug F, beziehungsweise dessen Rahmen 5, und dem Gestänge 1 vorgesehen. Die Hydraulik-Akuator-Anordnung 6 in Fig. 1 umfasst zwei einseitig an einer Beaufschlagungsseite 13, 14 mit hydraulischem Druck beaufschlagbare gegenseitig arbeitende Hydraulik-Aktuatoren 7, 8 typischerweise HydraulikZylinder. Alternativ könnten auch ein drehrichtungsumkehrbarer Hydraulikmotor zwei mit gegensinnigen Drehrichtungen antreibbare Hydraulikmotoren eingesetzt werden.

Der Hydraulik-Aktuator 7 ist am Rahmen 5 in einer Anlenkung 11 und am Gestänge 1 bzw. dessen Mittelteil 2 in einer Anlenkung 12 jeweils schwenkbar abgestützt, wobei die Anlenkung 12 weiter außen liegt als die Anlenkung 11, und die Anlenkungen 11, 12 in etwa den gleichen Radialabstand von der Achse 4 haben. Der Hydraulik-Aktuator 8 ist spiegelbildlich in Anlenkungen 11', 12' abgestützt. Die Beaufschlagungsseiten 13, 14 sind jeweils über eine Leitung 9, 10 mit einem nicht dargestellten Hydrauliksystem verbunden. Zumindest am Gestänge 1 sind Sensoren S vorgesehen, z.B. Abstandssensoren, die mit einer Steuerelektronik CU signalübertragend verbunden sind. Die Sensorik kann weitere Sensoren am Ausbringfahrzeug F und/oder Gestänge 1 umfassen, z.B. Neigungssensoren und dergleichen. Die Steuerelektronik CU ist auch zumindest mit dem Hydrauliksystem der Hydraulik-Aktuatoren-Anordnung 6 verbunden.

Zweck der Hydraulik-Aktuatoren-Anordnung 6 ist es, das Gestänge 1 unter unterschiedlichen Betriebskonditionen zumindest im Wesentlichen bodenparallel zu halten und auch unter Nutzen der Trägheit des weitauskragenden Gestänges 1 bei Wankbewegungen des Ausbringfahrzeugs F auf unebenem Boden deren Einfluss auf die Schwenklage des Gestänges effizient zu dämpfen oder zu kompensieren.

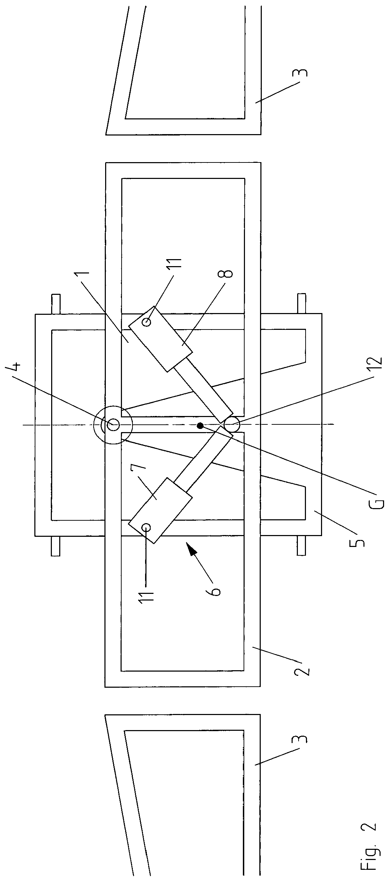

Die Ausführungsform der Fig. 2 unterscheidet sich von der der Fig. 1 hauptsächlich dadurch, dass die Hydraulik-Aktuatoren-Anordnung 6 anders gestaltet ist, und zwar mit zwei einseitig beaufschlagbaren Hydraulik-Aktuatoren 7, 8, die am Gestänge 1 bzw. dessen Mittelteil 2 in einer gemeinsamen Anlenkung 12 abgestützt sind, während ihre Anlenkungen 11, 11' in etwa zwischen dem Schwerpunkt G und der Achse 4 am Rahmen 5 platziert sind.

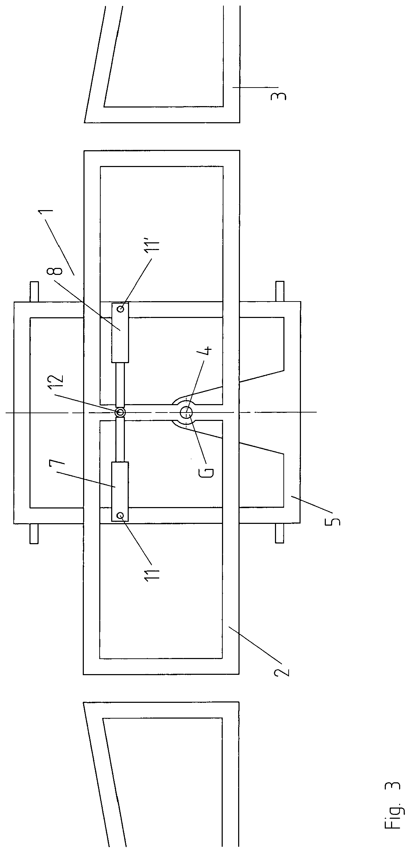

In der Ausführungsform der Fig. 3 sind die beiden einseitig beaufschlagbaren Hydraulik-Aktuatoren 7, 8 in etwa horizontal angeordnet, am Gestänge 1 bzw. dessen Mittelteil 12 z. B. oberhalb des Schwerpunkts G und der Achse 4 in der gemeinsamen Anlenkung 12 abgestützt, hingegen am Rahmen 5 an außenliegenden Anlenkungen 11, 11'. Der Schwerpunkt G des Gestänges 1 liegt hier z. B. zumindest im Wesentlichen in der Achse 4.

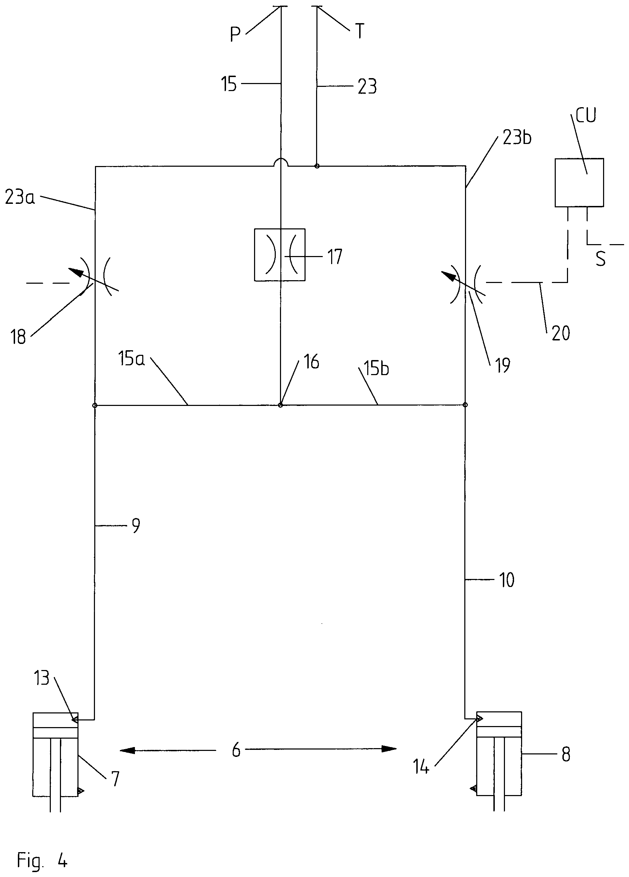

Fig. 4 verdeutlicht eine einfache Ausführungsform des Hydrauliksystems der bei den Hydraulik-Aktuatoren 7,8 der Ausführungsformen der Fig. 1 bis 3. Das Hydrauliksystem ist beispielsweise mit einem den Beaufschlagungsseiten 13,14 gemeinsam zugeordneten Zuströmweg 15 an eine Druckquelle P und über einen gemeinsamen Abströmweg 23 an einen Tank T (Rücklauf) angeschlossen. Der Zuströmweg 15 enthält ein Stromregelventil 17, mit dem permanent ein konstanter Volumenstrom unabhängig von Druckschwankungen stromauf- oder stromab zu den Beaufschlagungsseiten 13, 14 aber auch zum ständig offenen Rückströmweg 23 erzeugbar ist. Der Wert des Volumenstroms kann einstellbar sein, in Anpassung an unterschiedliche Betriebs- bzw. Ausstattungsbedingungen. Der Zuströmweg 15 zweigt an einer Aufzweigung 16 mit Zuströmweg-Zweigen 15a, 15b zu den Leitungen 9, 10 zu den Beaufschlagungsseiten 13, 14 auf. Die Leitungen 9, 10 sind ferner mit Rückströmweg-Zweigen 23a, 23b verbunden, in welchen jeweils eine Stelldrossel 18 bzw. 19 angeordnet ist, die über die Steuerelektronik CU einstellbar sind, sodass sich ihr Drosselquerschnitt optional stufenlos verändern lässt. In jedem Betriebsmodus zirkuliert Hydraulikmedium im Hydrauliksystem.

Im Betriebsmodus auf horizontalem Gelände zirkuliert das Hydraulikmedium permanent mit dem eingestellten Volumenstrom im Hydrauliksystem, wobei bei gleich eingestellten Stelldrosseln 18, 19 aufgrund der von diesen erzeugten Druckdifferenzen gleiche Drücke an den Beaufschlagungsseiten 13, 14 aufgebaut werden und das Gestänge 1 bodenparallel eingestellt ist und gehalten wird, solange die Sensoren S keine unterschiedlichen Signale liefern. Liefern die Sensoren S unterschiedliche Signale, die beispielsweise anzeigen, dass das Gestänge 1 an der Seite des Hydraulik-Aktuators 7 tiefer steht als an der gegenüberliegenden Seite, dann wird über die Steuerelektronik CU der Drosselquerschnitt der Stelldrossel 18 verkleinert (gegebenenfalls optional gleichzeitig der Drosselquerschnitt der Stelldrossel 19 vergrößert), so dass die Beaufschlagungsseite 13 höheren Druck erhält als die Beaufschlagungsseite 14, bis das Gestänge 1 wieder in die bodenparallele Schwenklage eingestellt wird.

Um die Längsachse auftretende Wankbewegungen des Ausbringfahrzeugs F aufgrund unebenen Bodens werden zunächst auf hydraulischem Weg abgedämpft, auch unter Nutzung der Trägheit des Gestänges 1, so dass sich die bodenparallele Lage des Gestänges 1 nicht nennenswert ändert. Wankt beispielsweise in Fig. 1 das Ausbringfahrzeug F nach rechts, weil die linken Räder R eine Erhebung überfahren, dann wird der Hydraulik-Aktuator 7 eingeschoben und der Hydraulik-Aktuator 8 ausgezogen. Beim Einschieben des Hydraulik-Aktuators 7 steigt der Druck an der Beaufschlagungsseite 13 an und wird Hydraulikmedium ausgeschoben, von dem ein Teil durch die Stelldrossel 18 abströmt und dämpft und ein Teil zum anderen Hydraulik-Aktuator 8 verlagert wird bzw. bewirkt, dass der Volumenstrom an der Seite des Hydraulik-Aktuators 8 und der Druck an der Beaufschlagungsseite 14 kurzzeitig steigen. Im Resultat wird das Gestänge 1 im Wesentlichen weiterhin bodenparallel gehalten. Zumindest ein Großteil der aus dieser Wankbewegung resultierenden Energie wird in den Stelldrosseln 18, 19 aufgezehrt, was eine effiziente Dämpfung bewirkt. Sollte dennoch das Gestänge 1 die Tendenz entwickeln, die bodenparallele Schwenklage um die Achse 4 aufzugeben, wird über die Steuerelektronik CU anhand der Sensorsignale eine Verstellung zumindest einer der Stelldrosseln 18, 19 vorgenommen, um dieser Tendenz entgegenzuwirken bzw. sie zu beseitigen.

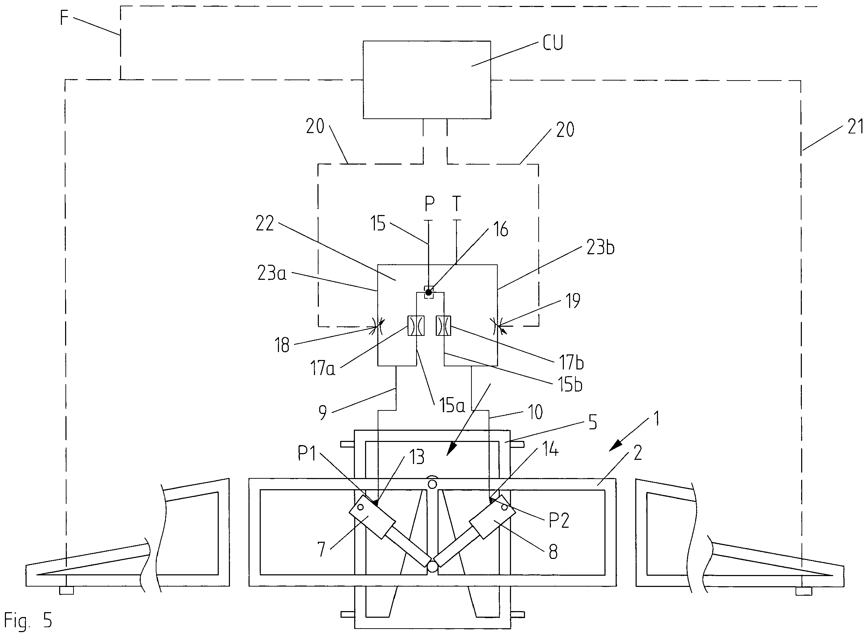

Die Ausführungsform Fig. 5 ist der der Fig. 2 ähnlich. Das Hydrauliksystem der beiden Hydraulik-Aktuatoren 7, 8 ist insofern unterschiedlich von dem der Fig. 4, als der gemeinsame Zuströmweg 15, der an der Aufzweigung 16 in die Zuströmweg-Zweige 15a, 15b aufzweigt, in jedem Zuströmweg-Zweig 15a, 15b ein Stromregelventil 17a, 17b enthält. In den Abströmweg-Zweigen 23a, 23b ist auch hier jeweils eine Stelldrossel 18 angeordnet, die über die Steuerelektronik CU und Leitungen 20 verstellbar ist. Die Sensoren S am Gestänge 1 sind über eine Leitung 21 mit der Steuerelektronik CU des Ausbringfahrzeugs F verbunden.

Als Alternative ist in Fig. 5 an der Aufzweigung 16 ein Stromteiler 22 gestrichelt angedeutet, der in den beiden Zuströmweg-Zweigen 15a, 15b gleiche konstante Volumenströme einstellt. Hier kann stromauf des Stromteilers 22 die Hydraulik so ausgelegt sein, dass der Stromteiler bereits einen konstanten Volumenstrom erhält, den er beispielsweise zu gleichen Teilen aufteilt. Auf diese Weise können separate Stromregelventile 17a, 17b eingespart werden.

In der Ausführungsform in Fig. 5 sind die Beaufschlagungsseiten 13, 14 nicht direkt miteinander verbunden. Dennoch wird die bodenparallele Schwenklage leicht eingestellt und gehalten und werden Wankbewegungen des Ausbringfahrzeugs F abgedämpft bzw. kompensiert. Wenn die Sensoren identische Werte liefern, liegt eine bodenparallele Schwenklage vor. Ist der Wert des Sensors S an der linken Seite beispielsweise größer als der Wert des Sensors S an der rechten Seite, verringert die Steuerelektronik CU den Drosselquerschnitt der Stelldrossel 18 und vergrößert den Drosselquerschnitt der Stelldrossel 19. Aufgrund dieser Veränderung der Drosselquerschnitte erhöht sich der Druck p1 an der Beaufschlagungsseite 13 gegenüber dem sich verringernden Druck p2 an der Beaufschlagungsseite 14, wodurch die Schwenklage wieder in eine bodenparallele Schwenklage zurückgeführt wird. Da gleichzeitig Hydraulikmedium über die Stelldrosseln 18, 19 abstimmt, wird stets gedämpft.

Ist das Gestänge 1 so eingestellt, dass es asymmetrisch auskragt, würde es aufgrund der Schwerkraft in Figur 1 pendelartig um die Achse 4 kippen. Eine solche Tendenz wird von den Sensoren S festgestellt, worauf die Steuerelektronik CU die Stelldrosseln 18, 19 entsprechend umstellt, bis sich trotz der Asymmetrie das Gestänge wieder in der bodenparallelen Schwenklage befindet.

Es kann die Steuerelektronik alternativ oder additiv vorprogrammiert oder eingestellt werden, dass dieser Betriebsmodus automatisch ausgeführt wird, z. B. während des Aus- oder Einklappens von Ausleger-Abschnitten 3.

Wankt das Ausbringfahrzeug F in Fig. 5 nach rechts, wird der Hydraulik-Aktuator 7 ausgezogen und wird der Hydraulik-Aktuator 8 eingeschoben. Da der Druck p1 sinkt, sinkt auch die Druckdifferenz über die Stelldrossel 18, und geht relativ mehr Hydraulikmedium durch die dämpfende Stelldrossel 18 durch. Am anderen Hydraulik-Aktuator 8 steigt der Druck p2 und die Druckdifferenz über die Stelldrossel 19 die und noch stärker dämpft. Sollte es dabei zur Aufgabe der bodenparallelen Schwenklage des Gestänges 1 kommen, greift die Steuerelektronik CU ein, um durch Veränderung der Drosselquerschnitte der Stelldrosseln 18 und 19 oder nur 18 oder 19 die Drücke p1, p2 weiter zu ändern und so die bodenparallele Schwenklage wieder einzustellen.

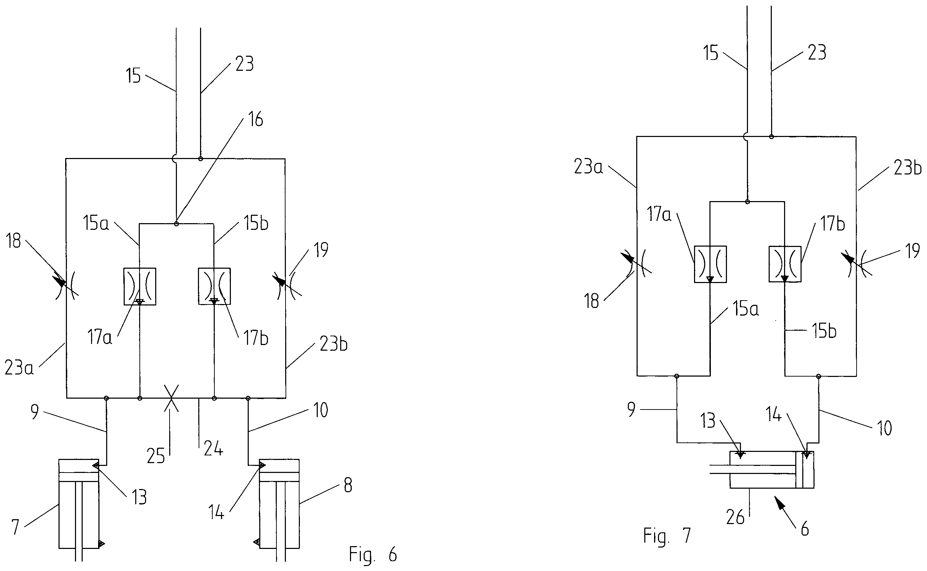

Die Ausführungsform in Fig. 6 ist der der Fig. 5 ähnlich. Im Unterschied zu Fig. 5 sind jedoch die Beaufschlagungsseiten 13, 14 bzw. die Leitungen 9, 10 über eine Querverbindung 24 miteinander verbunden, so dass ein Austausch an Hydraulikmedium bei ungleichen Drücken an den Beaufschlagungsseiten 13, 14 ermöglicht wird. Dies kann den insgesamt erforderlichen Durchsatz an Hydraulikmedium minimieren lassen, und verhindert auch, dass bei einer schnellen Bewegung eines Hydraulik-Aktuators dieser ein Vakuum ziehen könnte. Zweckmäßig ist in der Verbindung 24 eine Festdrossel 25 enthalten, die in ihrem Durchgangsquerschnitt auf den jeweils eingestellten Volumenstrom bzw. den Durchgangsquerschnitt der Stelldrossel 18 oder 19 abgestimmt ist. Die Festdrossel 25 könnte alternativ auch verstellbar sein, z.B. als einfache Drosselschraube ausgebildet werden. Ein Austausch an Hydraulikmedium läuft ähnlich ab, wie anhand Fig. 4 erläutert, allerdings lässt die Festdrossel 25 deutlich unterschiedliche Drücke an den Beaufschlagungsseiten 13, 14 einstellen.

Fig. 7 zeigt eine Ausführungsform des Hydrauliksystems ähnlich der von Fig. 5. Im Unterschied umfasst hier die Hydraulik-Aktuator-Anordnung 6 nicht zwei einfach wirkende und gegensinnig angreifende Hydraulik-Aktuatoren 7, 8, wie in den hervorgehenden Ausführungsformen, sondern einen einzigen doppelt wirkenden Hydraulik-Aktuator 26, mit beiden Beaufschlagungsseiten 13, 14. Mit dem Hydraulik-Aktuator 26 können die Hydrauliksysteme entsprechend den Fig. 4, 5 oder 6 kombiniert werden.

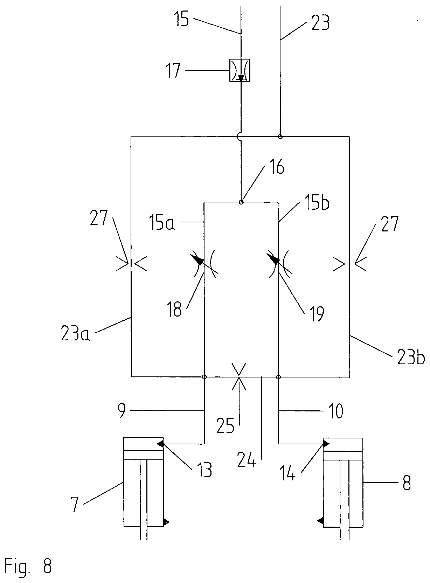

In den Ausführungsformen der Fig. 4, 5, 6 und 7 wird mit einem Prinzip gearbeitet, bei dem eine konstante Zuströmung und eine variable Abströmung realisiert sind, während in der nachfolgenden Ausführungsform der Fig. 8 eine variable Zuströmung und eine konstante Abströmung realisiert sind.

In der Ausführungsform der Fig. 8 ist im Zuströmweg 15 stromauf der Aufzweigung 16 das Stromregelventil 17 angeordnet, das permanent den konstanten Volumenstrom einstellt, der sich in die Zuströmweg-Zweige 15a, 15b aufteilt. Die Zuströmweg-Zweige 15a, 15b enthalten jeweils eine Stelldrossel 18, 19. Die Leitungen 9, 10 bzw. Beaufschlagungsseiten 13, 14 sind hier über die Querverbindung 24 zum Austausch von Hydraulikmedium verbunden, bevorzugt über die Festdrossel 25. Die beiden Abströmweg-Zweige 23a, 23b enthalten jeweils eine Festdrossel 27. Die Durchgangsquerschnitte der Festdrosseln 27 können untereinander gleich sein. Die unterschiedlichen Drücke an den Beaufschlagungsseiten 13, 14 werden hier unter anderem aus dem Zusammenspiel der jeweiligen Stelldrossel 18 oder 19 mit der ihr zugeordneten Festdrossel 27 erzeugt, wobei sich der konstante Volumenstrom aus dem Stromregelventil 17 unterschiedlich aufteilt, abhängig von der jeweiligen Druckeffizienz über die Stelldrossel 18 oder 19. Auch beim Dämpfen des Systems wirken die Stelldrosseln 18 mit den Festdrosseln 27 zusammen, gegebenenfalls auch mit der Festdrossel 25. Das Hydrauliksystem der Fig. 8 kann auch für einen doppelseitig beaufschlagbaren Hydraulik-Aktuator 26 wie in Fig. 7 verwendet werden.

Das Stromregelventil 17, 17a, 17b kann als Zweiwege-Stromreglerventil ausgebildet sein, oder eine Druckwaage mit zugeordnetem Drosselventil umfassen. Dieses Drosselventil könnte durch einen Proportialmagneten (gegebenenfalls mit hydraulischer Vorsteuerung) verstellbar sein, um den Volumenstrom nach Bedarf ändern zu können. Die Stelldrossel ist zweckmäßig in einem Drosselventil mit einem Proportialmagneten enthalten, der von der Steuerelektronik CU ansteuerbar ist und den Durchgangsquerschnitt proportional zur Stromstärke oder Spannung einstellt. Hier könnte ein Wegaufnehmer eine Rückmeldung für die Steuerelektronik bereitstellen. Im Falle eines Stromteilerventils, wie in Fig. 5 angeordnet, könnte dieses so ausgelegt sein, dass es nicht nur den ankommenden Volumenstrom in gleiche Teile aufteilt, sondern die Volumenströme auch konstant hält.

Grundsätzlich wird zum Einstellen und/oder Variieren der Drücke an den Beaufschlagungsseiten 13, 14 ein stetiger Fluss oder Umlauf des Hydraulikmediums über die Beaufschlagungsseiten erzeugt. Der Druck an der jeweiligen Beaufschlagungsseite kann mittels der Stelldrosseln variiert werden. Wird beispielsweise der Durchgangsquerschnitt verringert, steigt der Druck an der Beaufschlagungsseite solange an, bis die Hydraulikmediummenge über den verringerten Querschnitt abfließen konnte. Dabei wird wirksam gedämpft. Die Dämpfung des Hydrauliksystems lässt sich relativ einfach variieren. Wenn nämlich die Hydraulik-Aktuatoren aufgrund von Relativbewegungen zwischen dem Gestänge und dem Ausbringfahrzeug verstellt werden, muss verdrängtes Hydraulikmedium zusätzlich zum permanent eingestellten Volumenstrom über den jeweiligen Abströmquerschnitt abgeführt werden. Der gesamte Volumenstrom, der über den Abflussquerschnitt abgeführt werden muss, ergibt sich aus dem konstanten Volumenstrom im Zuströmweg und dem zeitweilig verdrängten Volumenstrom aus dem Hydraulik-Aktuator. Durch Ändern des Verhältnisses zwischen dem konstant eingestellten Volumenstrom und dem aus dem Hydraulik-Aktuator verdrängten Volumenstrom lässt sich die Dämpfung des Hydrauliksystems variieren.

In einem nicht dargestellten Ausführungsbeispiel kann anstelle des Stromregelventils zur Einstellung des individuellen Druckes auch zumindest eine einen veränderbaren Hydraulikstrom liefernde Hydraulikpumpe eingesetzt werden. Hierbei ist der Hydraulikpumpe gelieferte und einzustellende Volumenstrom entsprechend mittels geeigneter Einstellmittel wählbar.

## Patentansprüche

1. Ausbringfahrzeug (F) mit einem zumindest um eine in etwa in Fahrtrichtung orientierte Achse (4), schwenkbaren, quer zur Fahrtrichtung orientierten Gestänge (1) und einer wirkungsmäßig zwischen dem Ausbringfahrzeug (F) und dem Gestänge (1) angeordneten Hydraulik-Aktuator-Anordnung (6) zum Einstellen und Halten einer zumindest im Wesentlichen bodenparallelen Schwenklage des mit mit einer Steuerelektronik (CU) verbundenen Sensoren (S) ausgestatteten Gestänges (1), wobei die Hydraulik-Aktuator-Anordnung (6) über eine Hydraulikeinrichtung an einer ersten und einer zweiten Beaufschlagungsseite (13, 14) über Strömungswege mit einem eine Druckquelle (P) und einen Tank (T) umfassenden Hydrauliksystem verbunden und an jeder Beaufschlagungsseite (13, 14) individuell mit Druck beaufschlagbar ist, **dadurch gekennzeichnet, dass** die Hydraulikeinrichtung wenigstens ein permanent einen konstanten Volumenstrom im Hydrauliksystem einstellendes Hydraulikelement (17, 17 a, 17 b, 22) ist, und dass in mit der Druckquelle (P) und dem Tank (T) verbundenen Strömungswegen zu und von den Beaufschlagungsseiten (13,14) jeder Beaufschlagungsseite (13, 14) ein zumindest über die Steuerelektronik (CU) im Durchgangsquerschnitt verstellbares Element (18, 19) zum individuellen Einstellen des Drucks zugeordnet ist.

2. Ausbringfahrzeug nach Anspruch 1, **dadurch gekennzeichnet, dass** das Hydraulikelement (17, 17a, 17b, 22) ein Stromregelventil ist und dass das Element (18, 19) eine Stelldrossel ist.

3. Ausbringfahrzeug nach Anspruch 1, **dadurch gekennzeichnet, dass** das Hydraulikelement (17, 17a, 17b, 22) eine einen veränderbaren Hydraulikstrom liefernde Hydraulikpumpe ist und dass das Element eine Stelldrossel ist.

4. Ausbringfahrzeug nach Anspruch 1, **dadurch gekennzeichnet, dass** der Wert des vom Stromregelventil oder der Hydraulikpumpe eingestellten Volumenstroms wählbar ist.

5. Ausbringfahrzeug nach Anspruch 1, **dadurch gekennzeichnet, dass** die Hydraulik-Akuator-Anordnung (6) entweder einen doppelt wirkenden Hydraulik-Aktuator (26) mit beiden Beaufschlagungszeiten (13, 14) oder zwei einfach wirkende gegensinnig angreifende Hydraulik-Aktuatoren (7, 8) mit jeweils einer der Beaufschlagungsseiten (13, 14) aufweist.

6. Ausbringfahrzeug nach einem der vorhergehenden Ansprüche, **dadurch gekennzeichnet, dass** die ersten und zweiten Beaufschlagungsseiten (13, 14) miteinander quer verbunden sind, vorzugsweise über eine Festdrossel (25) oder eine Stelldrossel.

7. Ausbringfahrzeug nach mindestens einem der vorhergehenden Ansprüche, **dadurch gekennzeichnet, dass** der Schwerpunkt (G) des Gestänges (1) im Abstand unterhalb der Achse (4) liegt.

8. Ausbringfahrzeug nach wenigstens einem der vorhergehenden Ansprüche, **dadurch gekennzeichnet, dass** in einem sich zu den Beaufschlagungsseiten (13, 14) aufzweigenden, diesen gemeinsamen Zuströmweg (15) stromauf der Aufzweigung (16) ein Stromregelventil (17) und in getrennten Abströmwegen (23a, 23b) von beiden Beaufschlagungsseiten (13, 14) je eine Verstelldrossel (18, 19) angeordnet sind.

9. Ausbringfahrzeug nach wenigstens einem der Ansprüche 1 bis 6, **dadurch gekennzeichnet, dass** in einem sich zu den Beaufschlagungsseiten (13, 14) aufzweigenden, diesen gemeinsamen Zuströmweg (15) stromab der Aufzweigung (16) in beiden Zuströmweg-Zweigen (15a, 15b) je ein Stromregelventil (17a, 17b) und in getrennten Abströmwegen (23a, 23b) von den Beaufschlagungsseiten (13, 14) je eine Stelldrossel (18, 19) angeordnet sind.

10. Ausbringfahrzeug nach wenigstens einem der Ansprüche 1 bis 6, **dadurch gekennzeichnet, dass** in einem sich zu den Beaufschlagungsseiten (13, 14) aufzweigenden, diesen gemeinsamen Zuströmweg (15) an der Aufzweigung (16) ein Stromteilerventil (22) und in getrennten Abströmwegen (23a, 23b) von den Beaufschlagungsseiten (13, 14) je eine Stelldrossel (18, 19) angeordnet sind.

11. Ausbringfahrzeug nach wenigstens einem der Ansprüche 1 bis 6, **dadurch gekennzeichnet, dass** in einem sich zu den Beaufschlagungsseiten (13, 14) aufzweigenden, diesen gemeinsamen Zuströmweg (15) stromauf der Aufzweigung (16) ein Stromregelventil (17) und in beiden Zuströmweg-Zweigen (15a, 15b) je eine Stelldrossel (18, 19) sowie in getrennten Abströmwegen (23a, 23b) von den Beaufschlagungsseiten (13, 14) je eine Festdrossel (27) angeordnet sind.

12. Ausbringfahrzeug nach wenigstens einem der Ansprüche 8 bis 11, **dadurch gekennzeichnet, dass** zumindest die Stelldrossel (18, 19) in einem magnetbetätigten Ventil untergebracht ist, vorzugsweise in einem Ventil mit wenigstens einem von der Steuerelektronik (CU) ansteuerbaren Proportionalmagneten.

13. Ausbringfahrzeug nach Anspruch 2, **dadurch gekennzeichnet, dass** das Stromregelventil (17, 17a, 17b) eine Druckwaage und ein Drosselventil umfasst, vorzugsweise mit manueller, hydraulischer oder magnetischer Einstellvorrichtung für den Volumenstrom.

14. Ausbringfahrzeug nach wenigstens einem der vorhergehenden Ansprüche, **dadurch gekennzeichnet, dass** die Steuerelektronik (CU) mindestens einstellbar oder programmiert ist auf Betriebsmodi für horizontales Gelände, für Hanglagen, und für eine asymmetrische Gestänge-Auskragung.

## Claims

1. Applier vehicle (F) having a linkage (1) which can be pivoted at least about one axis (4) oriented approximately in the direction of travel and is oriented transversely with respect to the direction of travel, and a hydraulic-actuator arrangement (6), which is arranged operatively between the applier vehicle (F) and the linkage (1) and serves for setting and securing a pivoting position, at least essentially parallel to the ground, of the linkage (1) which is equipped with sensors (S) connected to control electronics (CU), wherein the hydraulic-actuator arrangement (6) is connected via a hydraulic device on a first and a second application side (13, 14), via flow paths, to a hydraulic system which comprises a pressure source (P) and a tank (T) and pressure can be applied to said hydraulic-actuator arrangement (6) individually on each application side (13, 14), **characterized in that** the hydraulic device is at least one hydraulic element (17, 17a, 17b, 22) which can continuously set a constant volume flow in the hydraulic system, and **in that** an element (18, 19) which can be adjusted at least in terms of through-flow cross section by means of the control electronics (CU) for individually setting the pressure is assigned, in flow paths, connected to the pressure source (P) and the tank (T), to and from the application sides (13, 14), to each application side (13, 14).

2. Applier vehicle according to Claim 1, **characterized in that** the hydraulic element (17, 17a, 17b, 22) is a flow-regulating valve and **in that** the element (18, 19) is an adjustment throttle.

3. Applier vehicle according to Claim 1, **characterized in that** the hydraulic element (17, 17a, 17b, 22) is a hydraulic pump delivering a modifiable hydraulic flow and **in that** the element is an adjustment throttle.

4. Applier vehicle according to Claim 1, **characterized in that** the value of the volume flow which is set by the flow-regulating valve or the hydraulic pump can be selected.

5. Applier vehicle according to Claim 1, **characterized in that** the hydraulic-actuator arrangement (6) has either a double-acting hydraulic actuator (26) with the two application times (13, 14) or two single-acting hydraulic actuators (7, 8) which engage in opposite directions, with one of the application sides (13, 14) in each case.

6. Applier vehicle according to one of the preceding claims, **characterized in that** the first and second application sides (13, 14) are transversely connected to one another, preferably via a fixed throttle (25) or an adjustment throttle.

7. Applier vehicle according to at least one of the preceding claims, **characterized in that** the centre of gravity (G) of the linkage (1) lies at a distance below the axis (4).

8. Applier vehicle according to at least one of the preceding claims, **characterized in that** a flow-regulating valve (17) is arranged in an inflow path (15) which branches into the application sides (13, 14) and is common to said sides, upstream of the junction (16), and in each case an adjustment throttle (18, 19) is arranged in separate outflow paths (23a, 23b) from the two application sides (13, 14).

9. Applier vehicle according to at least one of Claims 1 to 6, **characterized in that** in each case a flow-regulating valve (17a, 17b) is arranged in an inflow path (15), which branches into the application sides (13, 14) and is common to said sides, downstream of the junction (16) in both inflow path branches (15a, 15b), and in each case an adjustment throttle (18, 19) is arranged in separate outflow paths (23a, 23b) from the application sides (13, 14).

10. Applier vehicle according to at least one of Claims 1 to 6, **characterized in that** a flow-divider valve (22) is arranged in an inflow path (15), which branches into the application sides (13, 14) and is common to said sides, at the junction (16), and in each an adjustment throttle (18, 19) is arranged in separate outflow paths (23a, 23b) from the application sides (13, 14).

11. Applier vehicle according to at least one of Claims 1 to 6, **characterized in that** a low-regulating valve (17) is arranged in an inflow path (15), which branches into the application sides (13, 14) and is common to said sides, upstream of the junction (16), and an adjustment throttle (18, 19) is arranged in each of the two inflow path branches (15a, 15b), and a fixed throttle (27) is arranged in each of the separate outflow paths (23a, 23b) from the application sides (13, 14).

12. Applier vehicle according to at least one of Claims 8 to 11, **characterized in that** at least the adjustment throttle (18, 19) is accommodated in a magnet-activated valve, preferably in a valve having at least one proportional magnet which can be actuated by the control electronics (CU).

13. Applier vehicle according to Claim 2, **characterized in that** the flow-regulating valve (17, 17a, 17b) comprises a pressure balance and a throttle valve, preferably with a manual, hydraulic or magnetic adjustment device for the volume flow.

14. Applier vehicle according to at least one of the preceding claims, **characterized in that** the control electronics (CU) are at least adjustable or programmed for operating modes for flat terrain, for slopes and for an asymmetrical linkage projection.

## Revendications

1. Véhicule d'épandage (F), comprenant une tringlerie (1) orientée transversalement par rapport au sens du déplacement, pouvant pivoter au moins autour d'un axe (4) orienté approximativement dans le sens du déplacement, et un arrangement d'actionneur hydraulique (6) disposé fonctionnellement entre le véhicule d'épandage (F) et la tringlerie (1) pour régler et maintenir une position de pivotement au moins sensiblement parallèle au sol de la tringlerie (1) équipée de capteurs (S) reliés à une électronique de commande (CU), l'arrangement d'actionneur hydraulique (6) étant relié par le biais d'un dispositif hydraulique sur un premier et un deuxième côté de mise en charge (13, 14), par des trajets d'écoulement, à un système hydraulique comprenant une source de pression (P) et un réservoir (T) et pouvant être chargé en pression individuellement sur chaque côté de mise en charge (13, 14), **caractérisé en ce que** le dispositif hydraulique est un élément hydraulique (17, 17a, 17b, 22) qui règle en permanence un débit volumique constant dans le système hydraulique, et **en ce que** dans les trajets d'écoulement reliés à la source de pression (P) et au réservoir (T) vers et depuis les côtés de mise en charge (13, 14), un élément (18, 19) servant au réglage individuel de la pression, dont la section transversale de passage est réglable au moins par le biais de l'électronique de commande (CU), est associé à chaque côté de mise en charge (13, 14).

2. Véhicule d'épandage selon la revendication 1, **caractérisé en ce que** l'élément hydraulique (17, 17a, 17b, 22) est un régulateur de débit et **en ce que** l'élément (18, 19) est un étrangleur réglable.

3. Véhicule d'épandage selon la revendication 1, **caractérisé en ce que** l'élément hydraulique (17, 17a, 17b, 22) est une pompe hydraulique qui délivre un débit hydraulique variable et **en ce que** l'élément est un étrangleur réglable.

4. Véhicule d'épandage selon la revendication 1, **caractérisé en ce que** la valeur du débit volumique réglé par le régulateur de débit ou la pompe hydraulique est sélectionnable.

5. Véhicule d'épandage selon la revendication 1, **caractérisé en ce que** l'arrangement d'actionneur hydraulique (6) possède soit un actionneur hydraulique (26) à double action avec deux temps de mise en charge (13, 14), soit deux actionneurs hydrauliques (7, 8) à simple action appliqués en sens inverse avec respectivement l'un des côtés de mise en charge (13, 14).

6. Véhicule d'épandage selon l'une des revendications précédentes, **caractérisé en ce que** les premier et deuxième côtés de mise en charge (13, 14) sont reliés transversalement l'un à l'autre, de préférence par le biais d'un étrangleur fixe (25) ou d'un étrangleur réglable.

7. Véhicule d'épandage selon au moins l'une des revendications précédentes, **caractérisé en ce que** le centre de gravité (G) de la tringlerie (1) se trouve à distance au-dessous de l'axe (4).

8. Véhicule d'épandage selon au moins l'une des revendications précédentes, **caractérisé en ce qu'**un régulateur de débit (17) est disposé an amont de la division (16) dans un trajet d'arrivée (15) qui se divise en les côtés de mise en charge (13, 14) et commun à ceux-ci, et un étrangleur réglable (18, 19) est respectivement disposé dans des trajets d'évacuation (23a, 23b) séparés depuis les deux côtés de mise en charge (13, 14).

9. Véhicule d'épandage selon au moins l'une des revendications 1 à 6, **caractérisé en ce qu'**un régulateur de débit (17a, 17b) est respectivement disposé en aval de la division (16) dans les deux branches de trajet d'arrivée (15a, 15b) dans un trajet d'arrivée (15) qui se divise en les côtés de mise en charge (13, 14) et commun à ceux-ci, et un étrangleur réglable (18, 19) est respectivement disposé dans des trajets d'évacuation (23a, 23b) séparés depuis les côtés de mise en charge (13, 14).

10. Véhicule d'épandage selon au moins l'une des revendications 1 à 6, **caractérisé en ce qu'**un diviseur de débit (22) est disposé au niveau de la division (16) dans un trajet d'arrivée (15) qui se divise en les côtés de mise en charge (13, 14) et commun à ceux-ci, et un étrangleur réglable (18, 19) est respectivement disposé dans des trajets d'évacuation (23a, 23b) séparés depuis les côtés de mise en charge (13, 14).

11. Véhicule d'épandage selon au moins l'une des revendications 1 à 6, **caractérisé en ce qu'**un régulateur de débit (17) est disposé en amont de la division (16) dans un trajet d'arrivée (15) qui se divise en les côtés de mise en charge (13, 14) et commun à ceux-ci, et un étrangleur réglable (18, 19) est respectivement disposé dans les deux branches de trajet d'arrivée (15a, 15b) ainsi qu'un étrangleur fixe (27) respectivement dans des trajets d'évacuation (23a, 23b) séparés depuis les côtés de mise en charge (13, 14).

12. Véhicule d'épandage selon au moins l'une des revendications 8 à 11, **caractérisé en ce qu'**au moins les étrangleurs réglables (18, 19) sont logés dans une vanne actionnable magnétiquement, de préférence dans une vanne équipée d'au moins un aimant proportionnel pouvant être excité par l'électronique de commande (CU).

13. Véhicule d'épandage selon la revendication 2, **caractérisé en ce que** le régulateur de débit (17, 17a, 17b) comprend une balance de pression et une vanne d'étranglement, de préférence avec un système de réglage manuel, hydraulique ou magnétique du débit volumique.

14. Véhicule d'épandage selon au moins l'une des revendications précédentes, **caractérisé en ce que** l'électronique de commande (CU) est au moins réglable ou programmée sur des modes de fonctionnement pour des terrains horizontaux, pour des terrains en pente et pour un porte-à-faux asymétrique de la tringlerie.
